# EUROPÄISCHE PATENTSCHRIFT

(11) **EP 0 965 373 B1**
(45) Veröffentlichungstag und Bekanntmachung des Hinweises auf die Patenterteilung: **11.08.2004**
(21) Anmeldenummer: 99810436.8
(22) Anmeldetag: 19.05.1999
(51) Int. Cl.: B01D 3/00, B01D 3/14, F25B 1/06

(54) **Destillationsanlage mit Kolonne und Wärmepumpe.**
Distillation apparatus with column and heat pump
Appareil de distillation avec une colonne et une pompe à chaleur

(30) Priorität: 17.06.1998 EP 98810554
(43) Veröffentlichungstag der Anmeldung: 22.12.1999
(73) Patentinhaber: Sulzer Chemtech AG, 8404 Winterthur (CH)
(72) Erfinder: Meili, Albert, 638895 Singapore (SG)
(74) Vertreter: Sulzer Management AG

(56) Entgegenhaltungen:
- EP-A- 0 835 680
- EP-A- 0 842 686
- US-A- 3 869 351
- US-A- 4 626 321
- MEILI A: "HEAT PUMPS FOR DISTILLATION COLUMNS" CHEMICAL ENGINEERING PROGRESS, Bd. 86, Nr. 6, 1. Juni 1990 (1990-06-01), Seiten 60-65, XP000173792

## Beschreibung

Die Erfindung betrifft eine Destillationsanlage mit Kolonne und Wärmepumpe gemäss Oberbegriff von Anspruch 1 sowie Verwendungen der Anlage.

In einer Destillationskolonne wird einem Sumpf zur Erzeugung von Dampf Wärme zugeführt, während in einem Kolonnenkopf zur Verflüssigung von Dämpfen (oft Brüden genannt) eine entsprechende Wärmemenge abgeführt wird. Die Zufuhr von Wärme im Sumpf und die Abfuhr von Wärme im Kopf werden mit Vorteil über einen Wärmepumpenprozess gekoppelt, mittels dem ein Wärmetransport sowie Wärmewandel (d. h. Temperaturerhöhung der transportierten Wärme) durchführbar ist. Ein bevorzugtes Verfahren, die "direkte Brüdenverdichtung", kann bei vielen Produkten nicht angewendet werden, wegen Polymerisation, Zersetzung, Korrosion, geringer Dampfdichte etc. In solchen Fällen destilliert man konventionell ohne Wärmepumpe oder mit einer Wärmepumpe, deren Arbeitsmittel ein separater, in einem Hilfskreislauf geführter Stoff ist (siehe A. Meili, Chemical Engineering Progress 86 (1990) No. 6, Seiten 60-65). Dabei werden die Wärmezufuhr und die Wärmeabfuhr über indirekten Wärmetausch in einem Sumpfverdampfer bzw. in einem Brüdenkondensator durchgeführt. Als Arbeitsmittel der Wärmepumpe kommen verschiedene Stoffe in Frage. Aus thermodynamischen Gründen und dank seiner Ungefährlichkeit für die Umwelt ist Wasser verglichen mit anderen möglichen Stoffen vorteilhafter und daher vorzuziehen.

Ein Nachteil der Verwendung von Wärmepumpen ist, dass ein Verdichterausfall in der Praxis eine lange Stillstandzeit der Destillationsanlage zur Folge hat, da mit Maschinen verdichtet werden muss, für die in der Regel kein rascher Ersatz möglich ist. Es ist Aufgabe der Erfindung, eine Destillationsanlage zu schaffen, bei der mittels einer geeigneten Massnahme dieser Nachteil bezüglich einem Verdichterausfall wegfällt. Diese Aufgabe wird mit einer Anlage gemäss Anspruch 1 gelöst.

Die Destillationsanlage umfasst eine Kolonne und eine zwischen einem Sumpfverdampfer und einem Brüdenkondensator der Kolonne arbeitende Wärmepumpe. Die Wärmepumpe ist durch Einrichtungen substituierbar, die bei Bedarf an den Sumpfverdampfer und den Brüdenkondensator anschaltbar sind. Diese substituierenden Einrichtungen umfassen Einrichtungen zur Erzeugung von Dampf bzw. zur Bereitstellung eines Kühlmittels sowie Anschlussmittel. Die Kühlmittel können Flüssigkeiten (Wasser) oder Gase (Luft) sein.

Die abhängigen Ansprüche 2 bis 6 beziehen sich auf vorteilhafte Ausführungsformen der erfindungsgemässen Destillationsanlage. Gegenstand der Ansprüche 7 bis 10 ist die Verwendung dieser Anlage.

Nachfolgend wird die Erfindung anhand der Zeichnungen erläutert. Es zeigen:
- Fig. 1: eine schematische Darstellung einer ersten erfindungsgemässen Destillationsanlage und
- Fig. 2: eine entsprechende Darstellung einer zweiten Anlage.

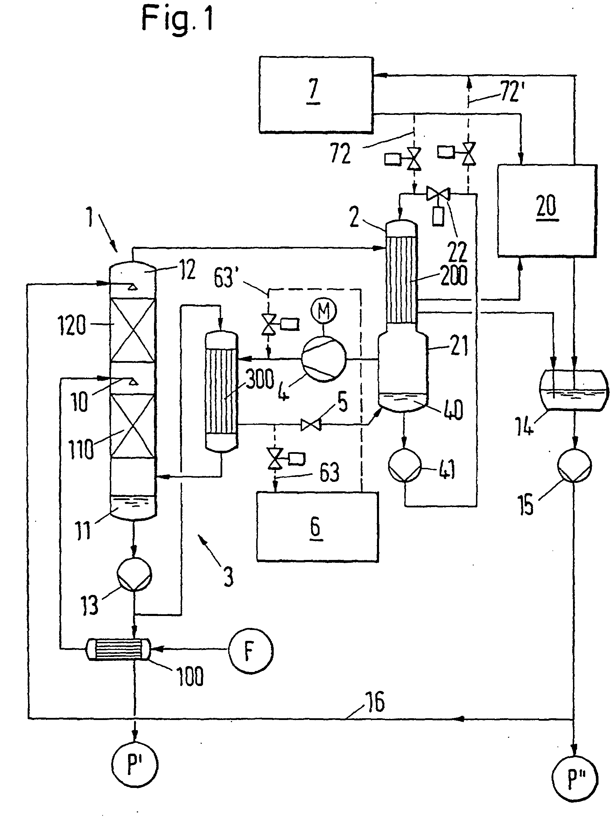

Die Komponenten der in Fig. 1 dargestellten Anlage sind:
- eine Kolonne 1 zur Durchführung einer Destillation, mit einem Verteiler 10 für ein Rohprodukt F (nämlich das zu behandelnde Stoffgemisch), einem Sumpf 11, einem Kolonnenkopf 12 und Einbauten 110 sowie 120;
- ein Brüdenkondensator 2 (Kondensator für die Kopfdämpfe) mit Sumpf 21 und Rohrbündel 200, welcher Verdampfer einer Wärmepumpe ist;
- eine Pumpe 41 zum Umwälzen von kondensiertem Arbeitsmittel 40 der genannten Wärmepumpe, das im Brüdenkondensator 2 verdampft wird;
- ein Sumpfverdampfer 3, mit Rohrbündel 300, Sumpf 11 der Kolonne 1 und Umwälzpumpe 13, welcher der Kondensator der Wärmepumpe ist;
- ein Verdichter 4 und ein Drosselorgan 5 der Wärmepumpe;
- eine Teilanlage 20 zur Entfernung von Inertgasen und von einer Überschusswärme, die weitgehend der Energie entspricht, die durch den Verdichterantrieb in den Prozess eingetragen wird;
- ein Tank 14 für das Kopfprodukt P", von dem aus über eine Umwälzpumpe 15 und eine Rücklaufleitung 16 kondensiertes Produkt P" als Rücklauf in die Kolonne rückgeführt wird;
- ferner eine Wärmesenke 7, d. h. eine Einrichtung 7 zur Bereitstellung eines Kühlmittels (insbesondere Kühlwasser oder auch Luft) und eine Wärmequelle 6, d. h. eine Einrichtung 6 zur Erzeugung von Dampf (insbesondere Wasserdampf).

Dem Rohprodukt F, das bereits durch eine Wärmezufuhr in der Teilanlage 20 vorgewärmt sein kann, wird in einem Wärmetauscher 100 aus einem bei der Destillation gewonnenen Sumpfprodukt P' weiter Wärme zugeführt, bevor es in die Kolonne 1 eingespeist wird.

Bei einem Versagen des Verdichters 4 werden dessen Anschlussleitungen mittels Verschlussorganen (nicht dargestellt) geschlossen, ein weiteres Verschlussorgan 22 im Verdampferkreislauf des Brüdenkondensators 2 ebenfalls geschlossen und gleichzeitig die Wärmequelle 6 über gestrichelt angegebenen Anschlussmittel 63, 63' an den Sumpfverdampfer 3 sowie die Wärmesenke 9 über Anschlussmittel 72, 72' an den Brüdenkondensator 2 angeschlossen. Somit kann nun während eines Ausfalls des Verdichters 4 der Betrieb der Destillationskolonne 1 auf konventionelle Weise mittels nicht gekoppelter Wärmetauschoperationen, nämlich mit den substituierenden Einrichtungen 6, 7 zur Erzeugung von Dampf bzw. zur Bereitstellung eines Kühlmittels, fortgesetzt werden.

Mit der Anlage in Fig. 1 lässt sich beispielsweise Styrol aus einem Gemisch gewinnen, das das leichter siedende Ethylbenzol und in kleineren Mengen Toluol sowie Benzol enthält. Der Schwersieder Styrol kann im Verdampfer 3 mit Wasserdampf von 104°C (Druck 1170 mbar) beheizt werden, so dass es im Sumpf 11 bei einer Temperatur von 100°C verdampftbar ist. Die Brüden im Kopf 12 mit einer Temperatur von 82°C lassen sich im Kondensator 2 mit kondensiertem Wasser von 77°C (Dampfdruck 416mbar) verflüssigen. Der Verdichter 4 muss Wasserdampf aus dem Sumpf 21 des Brüdenkondensators 2 von 416 auf 1170 mbar komprimieren.

Für die Abfuhr von Überschusswärme in der Teilanlage 20 ist es in der Regel von Vorteil, einen Kühler vorzusehen, der an ein Kühlwassernetz 7 angeschlossen ist. Bei einem Verdichterausfall kann dieses Kühlwassernetz im Sinne der Erfindung als die substituierende Einrichtung zur Bereitstellung von Kühlmittel verwendet werden.

Mit Vorteil ist eine Steuereinrichtung vorgesehen (nicht dargestellt), mittels der ein Umschalten von der Wärmepumpe auf die substituierenden Einrichtungen ausgeführt werden kann, sobald es zu einem Versagen des Verdichters 4 kommt.

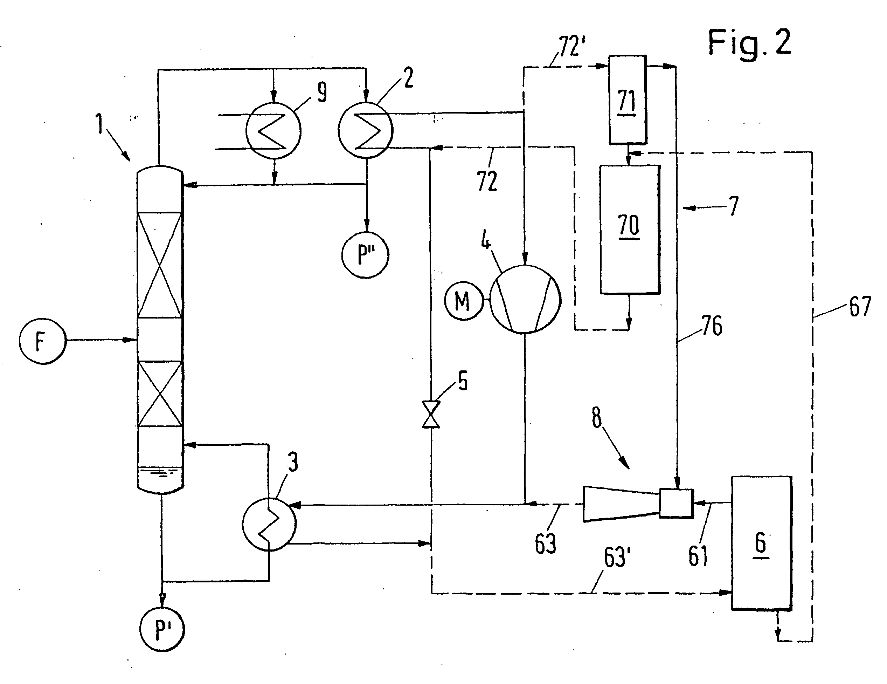

Die Einrichtung 6 zur Erzeugung von Dampf ist in der Regel ein Kessel, der Dampf von beispielsweise 6 oder 16 bar abgibt. Es ist daher ein Druckentspannungsorgan im Anschlussmittel 63' zwischen Kessel 6 und Sumpfverdampfer 3 anzuordnen. Es ist möglich, ein solches Druckentspannungsorgan als Teil der Einrichtung 7 zur Bereitstellung von Kühlmittel zu nutzen, so dass mit diesem Organ Exergie, die mit dem Dampf zur Verfügung steht, in eine Kühlleistung umsetzbar ist. Dies wird anschliessend anhand der Anlage der Fig. 2 illustriert, bei der das Druckentspannungsorgan ein Dampfstrahlverdichter 8 ist.

In Fig. 2 sind die gestrichelt gezeichneten Verbindungen 63, 63', 72, 72' Anschlussmittel, mit welchen über nicht dargestellte Verschlussorgane (vgl. Fig. 1) substituierende Einrichtungen 6, 7 mit der Destillationskolonne 1 in Wirkverbindung gebracht werden können. Die Kühleinrichtung 7 umfasst einen Vorkühler 71 und einem Hauptkühler 70. Bei einer Substitution der Wärmepumpe 4, 5 wird im Vorkühler 71 Kühlwasser, das im Brüdenkondensator 2 erwärmt worden ist, durch Verdunstung um einige Grad Celsius abgekühlt, bevor es im Kühler 70 auf die benötigte Vorlauftemperatur für den Kondensator 2 weitergekühlt wird. Der bei der Verdunstung im Vorkühler 71 abgegebene Dampf wird über eine Leitung 76 und durch den als Dampfstrahlverdichter ausgebildeten Hilfsverdichter 8 abgesaugt. Hat der Treibdampf (Zuleitung 61) des Kessels 6 einen Druck von 16 bar, so kann für das oben angegebene Beispiel (Styroldestillation) mit dem Hilfsverdichter 8 und Hochdruckdampf, der einen Anteil von rund 60% umfasst, entsprechend 40% Niederdruckdampf (rund 400 mbar) angesaugt werden, so dass in der Leitung 63 100% Dampf (1170 mbar) als Wärmequelle für den Sumpfverdampfer 3 zur Verfügung steht. Das bei der Wärmeabgabe kondensierte Wasser wird über die Leitung 63' in den Kessel 6 rückgeführt. Ein Überschuss an Kondensat, der dem angesaugten Niederdruckdampf entspricht, kann über eine Leitung 67 in die Kühleinrichtung 7 zurückgegeben werden (und zwar in den Kühler 70, wie dargestellt, oder noch besser in den Vorkühler 71).

Der Brüdenkondensator 2 kann als Apparat mit Rohrbündeln ausgebildet sein, an dessen Rohroberflächen die Brüden in Form von Fallfilmen kondensieren. Statt eines Rohrbündelkondensators kann auch ein Plattenkondensator (ein einen Plattenstapel enthaltender Apparat) verwendet werden. Entsprechendes gilt für die weiteren Wärmetauscher, in denen Phasenumwandlungen stattfinden.

In der Anlage der Fig. 2 ist ein Kühler 9 zum Abführen von Überschusswärme parallel zum Brüdenkondensator 2 angeordnet. Das Kühlmedium kann dabei Luft oder Wasser sein.

Die erfindungsgemässe Anlage lässt sich vorteilhaft für die Destillation von Gemischen F organischer Stoffe verwenden, wobei bei diesem Trennverfahren Brüden bei einer Temperatur zwischen 40 und 120°C gebildet werden und ein Sumpfprodukt bei einer Temperatur zwischen 60 und 160°C verdampft wird. Der Wärmepumpenprozess, durch den die Kondensation der Brüden mit der Verdampfung des Sumpfprodukts gekoppelt ist, kann mit einem Verdichter 4 durchgeführt werden, der mit einem Elektromotor M, einem Gasmotor, einer Dampfturbine oder einer Gasturbine antreibbar ist. Bei der Verwendung von Wasser als Arbeitsmittel 40 kann für den Verdichter 4 ein einstufiger Turbokompressor eingesetzt werden, dessen Schaufelrad mit Vorteil aus Titan gefertigt ist.

Gemäss der zugrundeliegenden Aufgabe der Erfindung wird bei einem Verdichterausfall von einem Betrieb mit der Wärmepumpe 4, 5 auf einen Betrieb mit den substituierenden Einrichtungen 6, 7 umgeschaltet.

Die substituierenden Einrichtungen 6, 7 können auch beim Anfahren der Destillation mit Vorteil verwendet werden, indem sie vor einer Inbetriebnahme des Verdichters 4 an den Sumpfverdampfer 3 bzw. den Brüdenkondensator 2 angeschlossen werden.

Wird die Anlage gemäss Fig. 2 sowie mit einem elektrisch angetriebenen Verdichter 4 verwendet, so kann ein alternierender Betrieb mit der Wärmepumpe bzw. den substituierenden Einrichtungen zu einer Optimierung der Energiekosten führen. Nämlich dann, wenn beispielsweise am Tag die Kosten für die elektrische Energie wesentlich höher als während der Nacht sind und die Kosten für die Dampferzeugung relativ tief sind, so dass der mit den substituierenden Einrichtungen verbundene Mehrbedarf an Energie aufgrund hoher Kosten für die elektrische Energie gesamthaft geringere Kosten verursacht. Zur Einsparung von Energiekosten kann so während der Nacht der Betrieb mit der Wärmepumpe 4, 5 und am Tag mit den substituierenden Einrichtungen 6, 7, 8 durchgeführt werden.

## Patentansprüche

1. Destillationsanlage mit einer Kolonne (1) und einer zwischen einem Sumpfverdampfer (3) und einem Brüdenkondensator (2) der Kolonne arbeitenden Wärmepumpe (4, 5), die einen mechanischen Verdichter für ein separates Arbeitsmittel aufweist,
**dadurch gekennzeichnet, dass** die Funktion der Wärmepumpe durch Einrichtungen (6, 7) substituierbar ist, die Komponenten der Anlage sind und die bei Bedarf an den Sumpfverdampfer und den Brüdenkondensator anschaltbar sind, und dass diese substituierenden Einrichtungen solche (6 bzw. 7) zur Erzeugung von Dampf des Arbeitsmittels bzw. zur Bereitstellung eines Kühlmittels sowie Anschlussmittel (63, 63', 72, 72') umfassen.

2. Destillationsanlage nach Anspruch 1, **dadurch gekennzeichnet, dass** als Arbeitsmittel der Wärmepumpe (4, 5) Wasser dient, das während des Wärmepumpenbetriebs Phasenumwandlungen unterworfen ist.

3. Destillationsanlage nach Anspruch 2, **dadurch gekennzeichnet, dass** ein Kühler für eine Abfuhr von Überschusswärme vorgesehen ist, dass dieser Kühler (9) an ein Kühlwassernetz angeschlossen ist und dass dieses Kühlwassernetz die Einrichtung (7) zur Bereitstellung von Kühlmittel ist.

4. Destillationsanlage nach einem der Ansprüche 1 bis 3, **dadurch gekennzeichnet, dass** eine Steuereinrichtung vorgesehen ist, über die ein Umschalten von der Wärmepumpe (4, 5) auf die substituierenden Einrichtungen (6, 7) ausführbar ist.

5. Destillationsanlage nach einem der Ansprüche 2 oder 3, **dadurch gekennzeichnet, dass** die Einrichtung (6) zur Erzeugung von Dampf ein Kessel ist und dass ein Druckentspannungsorgan im Anschlussmittel zwischen Kessel und Sumpfverdampfer angeordnet ist, wobei das Druckentspannungsorgan ein Teil der Einrichtung zur Bereitstellung von Kühlmittel sein kann, insbesondere ein Dampfstrahlverdichter (8), und welches Organ Exergie, die mit dem Dampf zur Verfügung steht, nutzbar macht.

6. Destillationsanlage nach einem der Ansprüche 1 bis 5, **dadurch gekennzeichnet, dass** der Brüdenkondensator (2) als Apparat mit Rohrbündeln oder Plattenstapeln ausgebildet ist, an deren Oberflächen die Brüden in Form von Fallfilmen kondensieren.

7. Verwendung einer Destillationsanlage gemäss einem der Ansprüche 1 bis 6, **dadurch gekennzeichnet, dass** ein Gemisch (F) von organischen Stoffen in flüssiger Form in die Kolonne (1) eingespiesen wird, dass bei der destillativen Trennung Brüden mit einer Temperatur zwischen 40 und 120°C und ein Sumpfprodukt mit einer Temperatur zwischen 60 und 160°C gebildet werden, dass eine Wärmepumpe (4, 5) für einen Wärmewandel und Wärmetransport eingesetzt wird, dass ein Verdichter (4) der Wärmepumpe mit einem Elektromotor (M), einem Gasmotor, einer Dampfturbine oder einer Gasturbine angetriebenen wird, wobei insbesondere der Verdichter ein einstufiger Turbokompressor ist und Wasser als Arbeitsmittel (40) dient.

8. Verwendung einer Destillationsanlage nach Anspruch 7, **dadurch gekennzeichnet, dass** bei einem Verdichterausfall von einem Betrieb mit der Wärmepumpe (4, 5) auf einen Betrieb mit den substituierenden Einrichtungen (6, 7) umgeschaltet wird.

9. Verwendung einer Destillationsanlage nach Anspruch 7 oder 8, **dadurch gekennzeichnet, dass** die substituierenden Einrichtungen (6, 7) beim Anfahren der Destillation an den Sumpfverdampfer (3) bzw. den Brüdenkondensator (2) angeschlossen werden.

10. Verwendung einer Destillationsanlage nach einem der Ansprüche 7 bis 9, **dadurch gekennzeichnet, dass** zur Optimierung von Energiekosten alternierend ein Betrieb mit der Wärmepumpe (4, 5) und ein Betrieb mit den substituierenden Einrichtungen (6, 7, 8) vorgesehen ist.

## Claims

1. Distillation plant comprising a column (1) and a heat pump (4, 5) which operates between a sump vaporiser (3) and an exhaust vapour condenser (2) of the column, the heat pump having a mechanical compressor for a separate working medium, **characterised in that** the function of the heat pump can be substituted by devices (6, 7) which are components of the plant and which can be switched to the sump vaporiser and the exhaust vapour compressor when required; and **in that** these substituting devices include devices (6 and 7 respectively) for the production of vapour and the provision of a coolant respectively, as well as connection means (63, 63', 72, 72').

2. Distillation plant in accordance with claim 1 **characterised in that** water, which is subjected to phase transitions during the operation of the heat pump, serves as the working medium of the heat pump (4, 5).

3. Distillation plant in accordance with claim 2 **characterised in that** a cooler is provided for the removal of excess heat; **in that** this cooler (9) is connected to a cooling water network; and **in that** this cooling water network is the device (7) for the provision of coolant.

4. Distillation plant in accordance with one of the claims 1 to 3 **characterised in that** a control unit is provided via which a switching over from the heat pump (4, 5) to the substituting devices (6, 7) can be carried out.

5. Distillation plant in accordance with claim 2 or claim 3 **characterised in that** the device (6) for the production of vapour is a boiler; and **in that** a pressure relaxation member is arranged in the connection means between the boiler and the sump vaporiser, with it being possible for the pressure relaxation member to be a part of the device for the provision of coolant, in particular a vapour jet compressor (8), and with said member making exploitable exergy which is available with the vapour.

6. Distillation plant in accordance with one of the claims 1 to 5 **characterised in that** the exhaust vapour compressor (2) is formed as an apparatus with tube bundles or plate stacks, at the surfaces of which the exhaust vapours condense in the form of falling films.

7. Use of a distillation plant in accordance with one of the claims 1 to 6 **characterised in that** a mixture (F) of organic materials is fed into the column (1) in liquid form; **in that** exhaust vapours with a temperature between 40 and 120°C and a sump product with a temperature between 60 and 160°C are formed during the distillatory separation; **in that** a heat pump (4, 5) is employed for a heat conversion and heat transport; **in that** a compressor (4) of the heat pump is driven by an electric motor (M), a gas motor, a steam turbine or a gas turbine, with the compressor in particular being a one-stage turbo-compressor and with water serving as a working medium (40).

8. Use of a distillation plant in accordance with claim 7 **characterised in that**, in the event of a compressor failure, a switch over is made from an operation with the heat pump (4, 5) to an operation with the substituting devices (6, 7).

9. Use of a distillation plant in accordance with claim 7 or claim 8 **characterised in that** the substituting devices (6, 7) are connected up to the sump vaporiser (3) and to the exhaust vapour compressor (2) respectively when starting up the distillation.

10. Use of a distillation plant in accordance with one of the claims 7 to 9 **characterised in that** an operation with the heat pump (4, 5) and an operation with the substituting devices (6, 7, 8) is alternatingly provided for the optimisation of energy costs.

## Revendications

1. Installation de distillation comprenant une colonne (1) et une pompe à chaleur (4, 5) fonctionnant entre un vaporisateur de bassin (3) et un condensateur de buées (2) de la colonne, qui présente un condensateur mécanique pour une substance active distincte, **caractérisée en ce que** la fonction de la pompe à chaleur peut être remplacée par des dispositifs (6, 7) qui sont des composants de l'installation et qui peuvent être raccordés en cas de besoin avec le vaporisateur de bassin et le condensateur de buées, et **en ce que** ces dispositifs de substitution comprennent des dispositifs (6 et 7) respectivement pour produire de la vapeur de la substance active et pour fournir une substance de refroidissement, ainsi que des moyens de raccordement (63, 63', 72, 72').

2. Installation de distillation selon la revendication 1, **caractérisée en ce que** de l'eau, qui est soumise pendant le fonctionnement de la pompe à chaleur à des commutations de phase, sert comme substance active de la pompe à chaleur (4, 5).

3. Installation de distillation selon la revendication 2, **caractérisée en ce qu'**un refroidisseur est prévu pour une évacuation d'un excédent de chaleur, **en ce que** ce refroidisseur (9) est raccordé à un réseau d'eau de refroidissement et **en ce que** ce réseau d'eau de refroidissement est le dispositif (7) destiné à fournir une substance de refroidissement.

4. Installation de distillation selon l'une quelconque des revendications 1 à 3, **caractérisée en ce qu'**un dispositif de commande est prévu, à l'aide duquel une commutation de la pompe à chaleur (4, 5) vers les dispositifs de substitution (6, 7) peut être réalisée.

5. Installation de distillation selon l'une quelconque des revendications 2 ou 3, **caractérisée en ce que** le dispositif (6) destiné à produire de la vapeur est une chaudière et **en ce qu'**un élément de détente de pression est agencé dans les moyens de raccordement entre la chaudière et le vaporisateur de bassin, l'élément de détente de pression pouvant être une partie du dispositif destiné à fournir une substance de refroidissement, en particulier un condensateur à jet de vapeur (8), et lequel élément rend utilisable l'exergie qui est disponible avec la vapeur.

6. Installation de distillation selon l'une quelconque des revendications 1 à 5, **caractérisée en ce que** le condensateur de buées (2) est réalisé comme un appareil avec des faisceaux de conduites ou des empilements de plaques, sur la surface desquelles les buées se condensent sous la forme de pellicules de descente.

7. Utilisation d'une installation de distillation selon l'une quelconque des revendications 1 à 6, **caractérisée en ce qu'**un mélange (F) de substances organiques sous forme liquide est alimenté dans la colonne (1), **en ce que**, lors de la séparation par distillation, des buées à une température comprise entre 40 et 120° C et un produit de bassin à une température comprise entre 60 et 160° C sont produits, **en ce qu'**une pompe à chaleur (4, 5) est utilisée pour un échange de chaleur et un transport de chaleur, **en ce qu'**un condensateur (4) de la pompe à chaleur est entraîné avec un moteur électrique (M), un moteur au gaz, une turbine à vapeur ou une turbine à gaz, et en particulier, le condensateur est un turbocompresseur à un seul étage et de l'eau sert comme substance active (40).

8. Utilisation d'une installation de distillation selon la revendication 7, **caractérisée en ce que**, en cas de panne du condensateur, une commutation est réalisée d'un fonctionnement avec la pompe à chaleur (4, 5) vers un fonctionnement avec les dispositifs de substitution (6, 7).

9. Utilisation d'une installation de distillation selon l'une quelconque des revendications 7 ou 8, **caractérisée en ce que** les dispositifs de substitution (6, 7) sont raccordés respectivement au vaporisateur de bassin (3) et au condensateur de buées (2) lors de l'amorce de la distillation.

10. Utilisation d'une installation de distillation selon l'une quelconque des revendications 7 à 9, **caractérisée en ce qu'**un fonctionnement avec la pompe à chaleur (4, 5) et un fonctionnement avec les dispositifs de substitution (6, 7, 8) est prévu en alternance afin d'optimiser les coûts énergétiques.
